(19) Europäisches Patentamt
European Patent Office
Office européen des brevets

(11) **EP 2 168 289 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(21) Anmeldenummer: **08749490.2**

(22) Anmeldetag: **20.05.2008**

(51) Int Cl.:
**H04L 1/00** *(2006.01)*

(86) Internationale Anmeldenummer:
**PCT/EP2008/004038**

(87) Internationale Veröffentlichungsnummer:
**WO 2008/154999 (24.12.2008 Gazette 2008/52)**

(54) **KOMMUNKATIONSSYSTEM UND VERFAHREN ZUM ANPASSEN VON ÜBERTRAGUNGSPARAMETERN AUF BASIS VON ZUVERLÄSSIGKEITSINFORMATIONEN REKONSTRUIERTER DATEN**

COMMUNICATIONS SYSTEM AND METHOD FOR ADAPTING TRANSMISSION PARAMETERS ON THE BASIS OF RELIABILITY INFORMATION OF RECONSTRUCTED DATA

SYSTÈME DE COMMUNICATION ET PROCÉDÉ D'ADAPTATION DE PARAMÈTRES DE TRANSMISSION SUR LA BASE DES INFORMATIONS DE FIABILITÉ DE DONNÉES RECONSTRUITES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.06.2007 DE 102007028724**
**21.11.2007 DE 102007055527**

(43) Veröffentlichungstag der Anmeldung:
**31.03.2010 Patentblatt 2010/13**

(73) Patentinhaber: **Rohde & Schwarz GmbH & Co. KG 81671 München (DE)**

(72) Erfinder:
• **SCHOBER, Henrik**
**85457 Wörth (DE)**
• **LANGGUTH, Torsten**
**82008 Unterhaching (DE)**

(74) Vertreter: **Körfer, Thomas Mitscherlich PartmbB Patent- und Rechtsanwälte Sonnenstrasse 33 80331 München (DE)**

(56) Entgegenhaltungen:
**DE-C1- 19 736 625     US-A1- 2004 037 262**

**Beschreibung**

Die Erfindung bezieht sich auf ein Kommunikationssystem mit in Abhängigkeit von einem Zuverlässigkeitswert konfigurierbaren Übertragungsparametern, sowie auf ein Verfahren zum Anpassen dieser Übertragungsparameter auf Basis von Zuverlässigkeitsinformationen, die für jedes Bit in einem Datenstrom mittels eines (auch iterativen) Schätzalgorithmus berechnet werden.

Funkkommunikationssysteme übertragen Informationen über Übertragungskanäle, deren Eigenschaften in der Regel nur durch statistische Größen bzw. statistische Modelle beschrieben werden können. Neben dem Rauschen, wie beispielsweise dem additiven weißen Rauschen (additive white Gaussian noise; AWGN), spielt auch die Mehrwegeausbreitung mit dem damit verbundenen Fading eine entscheidende Rolle für die Auslegung und die Leistungsfähigkeit von Funkkommunikationssystemen. Bei der Mehrwegeausbreitung erreichen die von der Antenne ausgestrahlten Funksignale auf verschiedenen Ausbreitungswegen das Empfangssystem. Die Funksignale können an Hindernissen reflektiert, gebeugt oder gestreut werden und erreichen somit mit zufälliger Amplitude und zufälliger Phase die Empfangseinheit. In der Empfangseinheit überlagern sich die Funksignale aller Ausbreitungspfade und führen zu konstruktiven oder destruktiven Überlagerungen (Interferenzen), wobei die konstruktive Interferenz eine gegenseitige Verstärkung von Signalanteilen und die destruktive Interferenz eine gegenseitige Auslöschung von Signalanteilen bewirkt. Des Weiteren bewirken Dopplereffekte bei Bewegung der Teilnehmer zusätzliche störende Einflüsse auf das Funksignal.

Um eine optimale Datenübertragung mit minimalen Energieeinsatz bzw. maximaler Reichweite, insbesondere über einen zeitlich veränderlichen Übertragungskanal zu erreichen, werden die zu übertragenden Daten in der Sendeeinheit mittels einer Kanalkodierung, welche der eigentlichen Information systematisch Redundanz hinzufügt, gesichert. In der Empfangseinheit ermöglicht die systematisch zugefügte Redundanz eine verbesserte Detektierbarkeit der ursprünglich gesendeten Daten. Die Kanalkodierung bewirkt, dass die Auswirkungen der oben genannten störenden Einflüsse auf die gesendeten Daten in der Empfangseinheit reduziert werden können, wodurch die Datenrekonstruktion insgesamt zuverlässiger ist.

Für eine möglichst effiziente Nutzung eines zeitlich veränderlichen Übertragungskanals soll die Datenübertragungsrate ebenfalls zeitlich veränderlich sein und adaptiv an die aktuellen Eigenschaften des Übertragungskanals angepasst werden. So kann beispielsweise bei guten Übertragungskanälen ein höherwertiges digitales Modulationsverfahren oder eine höhere Coderate eingestellt werden. Bei schlechten Übertragungskanälen dagegen soll es möglich sein, robustere Übertragungsmodi zu wählen (Modulationsverfahren mit geringerem Symbolumfang, bzw. eine kleinere Coderate).

Die Bewertung der aktuellen Kanaleigenschaften zur Einstellung der Übertragungsparameter wird gemäß dem Stand der Technik durch eine Schätzung des Signal-zu-Rauschverhältnisses (Signal to noise ratio, SNR) und die empfangene Signalstärke (Received Signal Strength Indication RSSI) oder das Auswerten von Übertragungsfehlern (Packet Error Rate, PER) gelöst. Eine Schätzung für das SNR kann beispielsweise über den Vergleich bekannter Synchronisations- oder Trainingssequenzen mit dem Empfangssignal gewonnen werden. Da die Kanaleinflüsse wie das Rauschen oder die Amplituden- und Phasenverteilung der Mehrwegepfade zufällig und daher nur mit statistischen Modellen beschreibbar sind und die Schätzung nur über einen kurzen Zeitraum durchgeführt wird, ist die Schätzung nicht optimal und weist Schätzungenauigkeiten auf. Aussagen bzw. Schätzungen mit geringen Schätzfehlern sind nur über lange Mittelwertbildungen möglich. Anstelle von bekannten Synchronisations- und Trainingssequenzen sind auch die geschätzten Empfangssymbole nach der Detektion zur Schätzung des SNR einsetzbar (Decision Feedback Verfahren). Allerdings haben in diesem Fall Detektionsfehler bei den Daten und deren Auftretenswahrscheinlichkeit einen großen Einfluss auf die Genauigkeit des Schätzalgorithmus des SNR.

Ein Schätzer für das SNR weist weitere Nachteile auf. Das SNR spiegelt nicht den Einfluss der Störungen auf die Leistungsfähigkeit des Dekoders für die Kanaldekodierung wieder. Trotz eines guten SNR ist es möglich, dass die Störungen und die Kanaleigenschaften dazu führen, dass die Kanaldekodierung schlechte Ergebnisse liefert. Andererseits kann trotz eines verhältnismäßig schlechten SNR noch eine fehlerfreie Dekodierung möglich sein. Ein weiterer Nachteil besteht, wenn die Signalqualität während einer Datenübertragung permanent bestimmt werden soll. Werden Synchronisations- und Trainingssequenzen zur Schätzung herangezogen, so müssen diese fortlaufend im Signal vorhanden sein, um zu einem beliebigen Zeitpunkt eine erneute Schätzung durchführen zu können. Eine kontinuierliche Schätzung ist nur mit Decision Feedback Algorithmen (rückgekoppelte Entscheidungsalgorithmen) mit den oben genannten Nachteilen realisierbar.

Aus der deutschen Offenlegungsschrift DE 196 51 593 A1 geht eine Anordnung hervor, die zum Optimieren einer Datenübertragung über einen bidirektionalen Funkkanal dient. Für den bidirektionalen Funkkanal sind senderseitig verschiedene Modulationsarten wählbar, wobei gleichzeitig die Coderate der Vorwärts-Fehlerkorrektur (FEC) sowie die Senderleistung einstellbar sind. Auf der Empfängerseite sind Module vorgesehen, die die Fehlerrate bestimmen und an den Sender rückübermitteln. Anhand der rückübermittelten Fehlerrate werden in der Sendeeinheit Parameter wie die Modulationsart, die Coderate bei der Kanalkodierung, die Senderleistung sowie die Größe der Datenpakete so konfiguriert bzw. eingestellt, dass am Empfänger eine definierte Fehlerrate nicht überschritten wird.

Von Nachteil an dieser Anordnung ist, dass lediglich die Fehlerrate, die bei der Übertragung über den Funkkanal auftritt, als einziges Kriterium für die Konfiguration der Sendeeinheit herangezogen wird. Dadurch ist es eher unwahrscheinlich, dass die Sendeeinheit optimal konfiguriert wird und dass eine maximale Datenübertragungsrate bei fehlerfreier Übertragung mit dieser Anordnung möglich ist. Dieses Verfahren basiert auf der Auswertung von Übertragungsfehlern, die Adaption der Parameter vor dem Auftreten von Fehlern ist nicht möglich. Aus der US Patentanmeldung 2004/0037262 A1 geht ein Verfahren hervor zum Anpassen einer Kodierrate in einem Kommunikationssystem. Hierbei wird in einer Empfängerstation ein Zuverlässigkeitswert ermittelt, der die Zuverlässigkeit einer Datenrekonstruktion mittels eines Turbo-Dekodierers angibt. Eine Auswertung dieses Zuverlässigkeitswertes liefert eine Kodierrate, die an den Übertragungskanal angepasst ist. Diese Kodierrate wird dann von der Empfängerstation an die Senderstation zurückübermittelt und dort bei der Kodierung von zu übertragenden Daten eingestellt (Stichwort 'closed loop').

Die Offenlegungsschrift DE 197 36 625 C1 zeigt ein ähnliches Verfahren zur Einstellung einer Kodierrate und/oder der Anzahl von Iterationsschritten bei der Turbo-Dekodierung basierend auf einer Dienstequalität, welche aus den Varianzen der Soft-Output-Ausgangssignale des Turbo-Dekodierers gewonnen wird.

Der Erfindung liegt die Aufgabe zu Grunde, ein verbessertes Kommunikationssystem sowie Verfahren für eine Datenübertragung anzugeben, mit denen auf Basis von Zuverlässigkeitswerten für die Schätzung der übertragenen Daten die Übertragungsparameter angepasst werden können.

Bezüglich des Kommunikationssystems wird die genannte Aufgabe erfindungsgemäß gelöst durch die Merkmale des Anspruchs 1. Vorteilhafte Weiterbildungen sind Gegenstand der auf den Anspruch 1 rückbezogen Unteransprüche.

Die Erfindung geht aus von einem Kommunikationssystem mit zumindest einer ersten Kommunikationseinrichtung, die über einen bidirektionalen Übertragungskanal mit zumindest einer zweiten Kommunikationseinrichtung verbunden ist. Beide Kommunikationseinrichtungen umfassen jeweils eine Datenrekonstruktionseinheit und eine Steuereinheit. Die Steuereinheit dient dazu, eine Konfiguration verschiedener Übertragungsparameter wie Modulationsart und/oder Coderate und/oder Senderleistung und/oder Größe von Datenpaketen in Abhängigkeit von einem Zuverlässigkeitswert vorzunehmen, der in der Steuereinheit ausgewertet wird. Der in der Empfangseinheit generierte Zuverlässigkeitswert gibt eine Wahrscheinlichkeit für eine Zuverlässigkeit bzw. eine Güte einer Datenrekonstruktion an, die in der Datenrekonstruktionseinheit aus empfangenen Signalen gesendete Daten rekonstruiert.

Dabei können die Zuverlässigkeitsinformationen für jedes übertragene Bit bestimmt werden. Weiterhin ermöglicht das erfindungsgemäße Verfahren implizit eine Adaption der Parameter auf Basis aller Einflussfaktoren des Übertragungsweges sowie eine Adaption, bevor Übertragungsfehler auftreten. Das wird durch die Adaption der Übertragungsparameter erreicht, wenn die Zuverlässigkeitswerte der Entscheidungen schlechter werden und beispielsweise eine bestimmte Schwelle erreichen.

Ein Vorteil des erfindungsgemäßen Kommunikationssystems liegt darin, dass die Adaption von Übertragungsparametern bzw. Sendeparametern wie Modulationsverfahren, Kanalkodierung, Senderleistung und die Größe der zu übertragenden Datenpakete auf Basis von Zuverlässigkeitswerten gesteuert werden. Diese Zuverlässigkeitswerte werden permanent für die empfangenen Daten beim Dekodierungsprozess der Kanaldekodierung errechnet, so dass eine zeitnahe Anpassung der Übertragungsparameter an einen aktuellen Übertragungskanal ermöglicht wird, wobei die Zuverlässigkeitswerte auch Störungen berücksichtigen, welche nicht im Übertragungskanal auftreten, sondern beispielsweise systematische Störungen oder Fehler von anderen Einheiten innerhalb der gesamten Nachrichtenübertragungskette sind.

Insbesondere ist es von Vorteil, wenn diese Zuverlässigkeitswerte (z. B. soft information, wie beispielsweise das Log-Likelihood-Verhältnis LLR, wobei der LLR-Wert dem Logarithmus des Verhältnisses der Wahrscheinlichkeiten für eine gesendete Null P(0) bzw. für eine gesendete Eins P(1) entspricht;

$$LLR = \log\left(\frac{P(0)}{P(1)}\right)) \quad \text{für jedes empfangene Bit}$$

während der Kanaldekodierung berechnet werden. Der Zuverlässigkeitswert ist ein Maß für die Wahrscheinlichkeit, mit der die gerade durchgeführte Schätzung für das betrachtete Datenbit richtig ist, und kann beispielsweise von der iterativen Dekodierung (z. B. Turbo Codes) oder der verketteten Demodulation und Kanaldekodierung verwendet werden. Nach der Dekodierung bzw. Demodulation wird eine harte Entscheidung im Hinblick auf das am wahrscheinlichsten gesendete Bit getroffen, wobei die Entscheidung in der Regel auf Basis einer Vorzeichenentscheidung durchgeführt wird.

Außerdem ist es ein Vorteil des erfindungsgemäßen Kommunikationssystems, dass die im Kanaldekoder ermittelte Zuverlässigkeitsinformation weiter ausgenutzt wird, um die Übertragungsparameter für eine nachfolgende Übertragung zu bestimmen, wobei die nachfolgende Übertragung in derselben Kommunikationseinheit wie die Auswertung der Zuverlässigkeitsinformation erfolgt (open loop Verfahren).

Alternativ zum open-loop Verfahren besteht die Möglichkeit, dass die Auswertung der Zuverlässigkeitsinformation und die Einstellung der Übertragungsparameter an unterschiedlichen Kommunikationseinheiten erfolgt, wobei die ausgewertete Zuverlässigkeitsinformation über den Übertragungskanal an eine zweite Kommunikationseinheit übertragen wird und dort bei der Einstellung der Übertragungsparameter berücksichtigt wird (closed-loop-Verfahren).

Dabei ist von Vorteil, dass über den Übertragungskanal höhere Datenraten übertragen werden können, je besser die Zuverlässigkeitswerte sind, da die Empfangseinheit in den Kommunikationseinheiten die Daten entsprechend gut schätzen konnte.

Die mit der Erfindung bzw. mit ihren Weiterbildungen erzielten Vorteile bestehen insbesondere auch darin, dass innerhalb einer Kommunikationseinheit eine erste Verarbeitungseinheit für zu sendende Daten (Sendeeinheit) und eine zweite Verarbeitungseinheit für die empfangenen Signale über eine Steuereinheit miteinander verbunden sind. Dadurch können die aktuell bestimmten Zuverlässigkeitswerte der empfangnen Daten dazu verwendet werden, in derselben Kommunikationseinheit eine von dieser Kommunikationseinheit ausgehende Übertragung optimal zu konfigurieren bzw. einzustellen (open loop) oder die Übertragungsparameter einer Peer-Kommunikationseinheit zu konfigurieren bzw. einzustellen (closed loop).

Ferner ist es vorteilhaft, wenn der mit dem Demodulator verbundene Kanaldekoder ein Turbodekoder ist, dessen Dekodierverfahren mehrere Iterationsschritte aufweist, wobei eine Anzahl der durchgeführten Iterationsschritte, der Verlauf der Zuverlässigkeitsinformationen im iterativen Prozess und der Zuverlässigkeitswert der Datenrekonstruktion an die Entscheidungseinheit und an die Steuereinheit weitergegeben wird. Dadurch wird insgesamt die Anpassung der Übertragungsparameter an den Kanal verbessert, da die Anzahl der durchgeführten Iterationsschritte ein ergänzendes Zuverlässigkeitskriterium darstellt.

Zudem ist es von Vorteil, wenn in der Entscheidungseinheit für eine Vorzeichenentscheidung der sich aus dem LLR-Wert gebildete Zuverlässigkeitswert berücksichtigt wird.

Außerdem ist es vorteilhaft, wenn in der zweiten Verarbeitungseinheit der ersten Kommunikationseinheit des erfindungsgemäßen Kommunikationssystems die Übertragungsparameter in Abhängigkeit von den aktuell empfangenen Zuverlässigkeitswerten konfiguriert werden und anschließend an einen Kanalkodierer sowie an einen Modulator der ersten Verarbeitungseinheit der ersten Kommunikationseinheit weitergeleitet werden. Dadurch ist eine Konfiguration nach dem open-loop-Verfahren realisiert, so dass die Übertragungsparameter unter der Vorraussetzung, dass Sendekanal und Empfangskanal im Hinblick auf ihre Übertragungseigenschaften symmetrisch sind, zeitnah optimiert eingestellt werden können.

Darüber hinaus ist es von Vorteil, wenn in der zweiten Verarbeitungseinheit der ersten Kommunikationseinheit die Übertragungsparameter in Abhängigkeit von den aktuell empfangenen Zuverlässigkeitswerten konfiguriert werden und anschließend über den Übertragungskanal an einen Kanalkodierer sowie an einen Modulator der ersten Verarbeitungseinheit der zweiten Kommunikationseinheit weitergeleitet werden. Dadurch ist ein closed-loop-Verfahren implementiert, wobei die Steuereinheit vorteilhafterweise entweder das open-loop-Verfahren oder das closed-loop-Verfahren anwenden kann.

Vorteilhafterweise umfasst das erfindungsgemäße Kommunikationssystem eine Einstellung der Übertragungsparameter in der ersten Verarbeitungseinheit, wobei unter anderem folgende Übertragungsparameter optimiert werden können: Modulationsart, Symbolumfang der Modulationsart, Senderleistung, Umfang der zu übertragenden Datenpakete, Kanalkodierverfahren und dessen Coderate.

Bezüglich des Verfahrens wird die genannte Aufgabe erfindungsgemäß gelöst durch die Merkmale des Anspruchs 17. Vorteilhafte Weiterbildungen sind Gegenstand der auf Anspruch 17 rückbezogenen Unteransprüche.

Das erfindungsgemäße Verfahren zum Anpassen von Übertragungsparametern in einem Kommunikationssystem durchläuft mehrere Verfahrensschritte. In der Steuereinheit der ersten Kommunikationseinheit wird ein Zuverlässigkeitswert, der ein Maß für die Zuverlässigkeit bzw. ein Maß für die Güte einer Datenrekonstruktion angibt, ausgewertet. Anschließend werden aus dieser Auswertung Übertragungsparameter bestimmt, die an den aktuell benutzten Übertragungskanal angepasst sind. Diese Übertragungsparameter werden entweder in der Sendeeinheit der ersten Kommunikationseinheit eingestellt (open loop Verfahren) oder an die zweite Kommunikationseinheit übermittelt und in der Sendeeinheit der zweiten Kommunikationseinheit eingestellt (closed loop Verfahren).

Ein Vorteil des erfindungsgemäßen Verfahrens besteht darin, dass die Anpassung der Übertragungsparameter auf Grund von Informationen durchgeführt wird, die den gesamten Einfluss der Übertragungsstrecke einschließlich des Modulationsverfahrens und des Kanalkodierungsverfahrens sowie deren wechselseitige Einflüsse mit berücksichtigt. Dadurch wird beispielsweise implizit auch die Fähigkeit des Dekoders der Kanaldekodierung mit einbezogen, die momentanen und zufälligen Störungen des Kanals zu kompensieren. Diese Informationen sind über das Signal- zu Rauschverhältnisses oder die Signalstärke alleine nicht zu gewinnen.

Des Weiteren ist es von Vorteil, dass mittels des erfindungsgemäßen Verfahrens bei einer Übertragung über den zeitlich veränderlichen Übertragungskanal fortlaufend die Übertragungsstrecke beurteilt wird und zeitnah auf Änderungen im Übertragungskanal reagiert wird, indem die entsprechenden Parameter angepasst werden.

Gemäß vorteilhafter Weiterbildung umfasst das erfindungsgemäße Verfahren den Schritt, dass der Zuverlässigkeitswert in einem Kanaldekoder mittels eines iterativen Schätzverfahrens für einzelne Bits ermittelt wird. Aus dem Verlauf des Zuverlässigkeitswertes während der einzelnen Iterationen können zusätzliche Informationen gewonnen werden, die eine verbesserte Einstellung der Übertragungsparameter ermöglichen.

Vorzugsweise wird der Verlauf der Zuverlässigkeitsinformationen in der Empfangseinheit erfasst und in der Steuereinheit ausgewertet.

Bevorzugt wird der Zuverlässigkeitswert aus einem Log-Likelihood-Verhältnis für ein geschätztes Bit oder aus der Anzahl der Iterationsschritte, die für ein gefordertes Zuverlässigkeitsmaß notwendig waren, bzw. aus einer Mittelwertsbildung der Anzahl dieser Iterationsschritte gebildet. Dies hat den Vorteil, dass mehrere sich ergänzende Kriterien zur Bewertung der Zuverlässigkeit der Kanaldekodierung bzw. der Datenrekonstruktion angewandt werden.

Des Weiteren ist es von Vorteil, wenn der Zuverlässigkeitswert einem Zweier-Tupel entspricht, welcher aus dem Log-Likelihood-Verhältnis (LLR) und der Anzahl der benötigten Iterationsschritte bzw. aus dem Log-Likelihood-Verhältnis (LLR) und dem Mittelwert der Anzahl der Iterationsschritte gebildet wird.

Das iterative Schätzverfahren ist vorteilhafterweise in einem Kanaldekoder mit zumindest einem ersten Dekoder und zumindest einem zweiten Dekoder implementiert. Dabei wird ein Zuverlässigkeitswert als Abbruchbedingung festgelegt und die Anzahl von Iterationsschritten bei der Initialisierung auf Null eingestellt. Das oben erwähnte Schätzverfahren selbst weist bevorzugt folgende Iterationsschritte auf:

Ein erster Teil eines Datenstroms wird dem ersten Dekoder zugeführt, welcher für jedes Bit des Datenstroms sowohl einen ersten Schätzwert für das entsprechende Bit bestimmt als auch eine erste Zuverlässigkeitsinformation über diesen Schätzwert angibt.

Diese erste Zuverlässigkeitsinformation wird dem zweiten Dekoder als eine Vorabinformation (a priori information) mitgeteilt. Der zweite Dekoder bestimmt unter Berücksichtigung dieser Vorabinformation für jedes Bit eines zweiten Teils des Datenstroms sowohl einen zweiten Schätzwert als auch eine zweite Zuverlässigkeitsinformation über diesen Schätzwert.

Dieser zweite Schätzwert wiederum wird dem ersten Dekoder zugeführt und als nächste Vorabinformation im darauf folgenden Iterationsschritt verwendet. Anschließend wird in einem Zähler eine Anzahl der Iterationsschritte inkrementiert.

Das iterative Schätzverfahren wird abgebrochen, sobald die erste Zuverlässigkeitsinformation und/oder die zweite Zuverlässigkeitsinformation größer oder gleich dem Wert der Abbruchbedingung ist bzw. sind.

In diesem Ausführungsbeispiel wird am Ausgang des Kanaldekoders der Zuverlässigkeitswert des iterativen Schätzverfahrens ermittelt, der der zweiten Zuverlässigkeitsinformation entspricht. Außerdem wird aus der Anzahl der Iterationsschritte wiederholt und fortwährend ein Zweier-Tupel gebildet, der eine verbesserte Aussage über die Güte des gerade durchgeführten Verfahrens macht.

Zweckmäßigerweise ist das iterative Schätzverfahren in einem Kanaldekoder einer Empfängereinheit einer Kommunikationseinrichtung implementiert.

Vorteilhafterweise werden mit der vorliegenden Erfindung die Übertragungsparameter nicht auf Basis von SNR-Werten (Signal-zu-Rauschverhältnis), RSSI-Werten (Received-Signal-Strength-Indication, empfangene Signalstärke) oder der Auswertung von Übertragungsfehlern eingestellt, sondern es werden Zuverlässigkeitswerte verwendet, die bei der Dekodierung der Bits berechnet werden. Als mögliche Werte können Zuverlässigkeitswerte z.B. vom SOVA-Algorithmus (Soft Output Viterbi Algorithmus) oder die LLR-Werte eines Turbodekoders verwendet werden. Damit können die Übertragungsparameter auf Basis einer Information eingestellt werden, die neben den aktuellen Kanaleigenschaften (Signal-zu-Rauschverhältnis SNR, Mehrwegesituation, Doppler, etc) auch die Kodierungs- und Modulationseigenschaften, sowie deren gegenseitige Wechselwirkungen mit berücksichtigt.

Ausführungsbeispiele der vorliegenden Erfindung werden nachfolgend beschrieben. Sowohl die Struktur als auch die Betriebsweise der Erfindung sowie deren weitere Vorteile und Aufgaben sind am besten anhand der folgenden Beschreibung in Verbindung mit der dazugehörigen Zeichnungen verständlich. In der Zeichnung zeigt:

Fig. 1      ein Ausführungsbeispiel eines erfindungsgemäßen Kommunikationssystems und

Fig. 2      ein detailliertes Schema einer Verarbeitungseinheit bzw. einer Empfangseinheit einer Kommunikationseinrichtung des erfindungsgemäßen Kommunikationssystems.

Einander entsprechende Teile sind in allen Figuren mit den gleichen Bezugszeichen versehen.

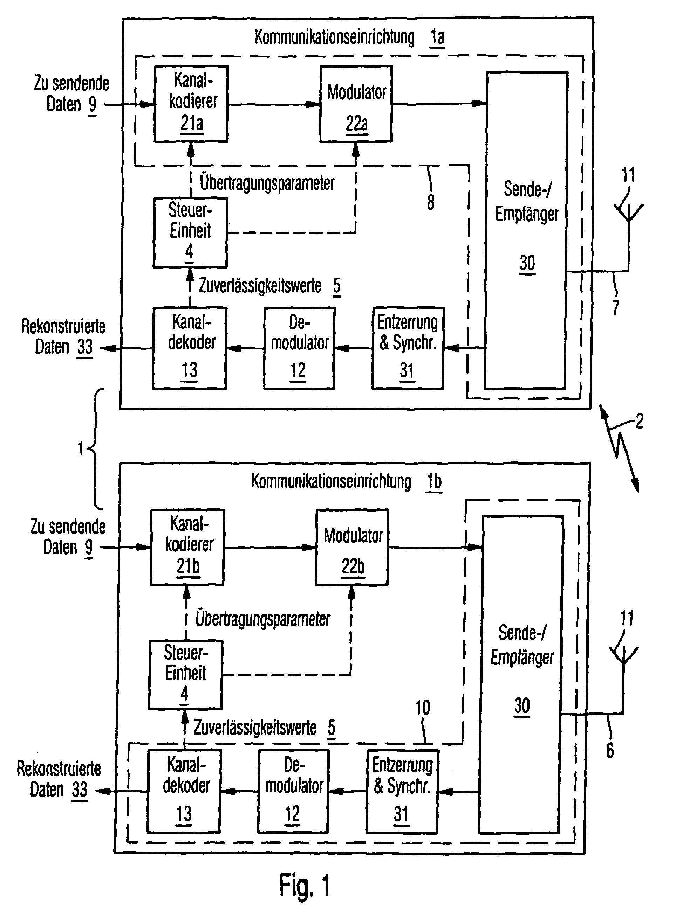

Fig. 1 zeigt ein Ausführungsbeispiel eines erfindungsgemäßen Kommunikationssystems 1, welches zumindest eine erste Kommunikationseinrichtung 1a umfasst, die über einen bidirektionalen Übertragungskanal 2 mit zumindest einer zweiten Kommunikationseinrichtung 1b verbunden ist. Beide Kommunikationseinrichtungen 1a, 1b umfassen jeweils eine Datenrekonstruktionseinheit 3 und eine Steuereinheit 4, die eine Konfiguration verschiedener Übertragungsparameter wie Modulationsart und/oder Coderate und/oder Senderleistung und/oder Umfang von Datenpaketen in Abhängigkeit von einem in der Steuereinheit 4 ausgewerteten Zuverlässigkeitswert 5 vornimmt. Der Zuverlässigkeitswert 5 gibt eine Wahrscheinlichkeit für eine Zuverlässigkeit bzw. eine Wahrscheinlichkeit für eine Güte einer Datenrekonstruktion an, die in der Datenrekonstruktionseinheit 3 aus empfangenen Signalen 6 gesendete Daten 7 rekonstruiert.

In der Sendeeinheit 8 der ersten Kommunikationseinrichtung 1a wird den zu sendenden Daten 9 im Kanalkodierer 21a systematisch Redundanz hinzugefügt. Anschließend werden die Bits entsprechend dem über die Steuereinheit 4 eingestellten Modulationsverfahren im Modulator 22a in Symbole umgesetzt, die im Sende/Empfänger 30 auf die Sendefrequenz gemischt werden. Im Übertragungskanal 2 können die gesendeten Daten 7 bzw. die gesendeten Signale einer Mehrwegeausbreitung unterliegen und werden z.B. durch Reflektion, Streuung, Dopplereffekte und Rauschen in Amplitude und Phase gestört.

In der Empfangseinheit 10 bzw. der Verarbeitungseinheit der zweiten Kommunikationseinheit 1b werden die empfangenen Signale 6, die unter anderem im Übertragungskanal 2 eine Störung erfahren haben, im Sende/Empfänger 30 herausgefiltert und zur weiteren Verarbeitung in das digitale Basisband konvertiert. In einer Entzerrungs- und Synchronisationseinheit 31 erfolgen die Synchronisation und eine Kanalentzerrung, die beispielsweise die Einflüsse der Mehrwegeausbreitung weitgehend kompensiert. Nach der Entzerrung erfolgt im Demodulator 12 die Demodulation und im Kanaldekoder 13 die Kanaldekodierung bzw. das Entfernen der im Kanalkodierungsverfahren zugefügten Redundanz. Anhand der Ergebnisse der Kanaldekodierung werden die am wahrscheinlichsten gesendeten Daten 9 geschätzt.

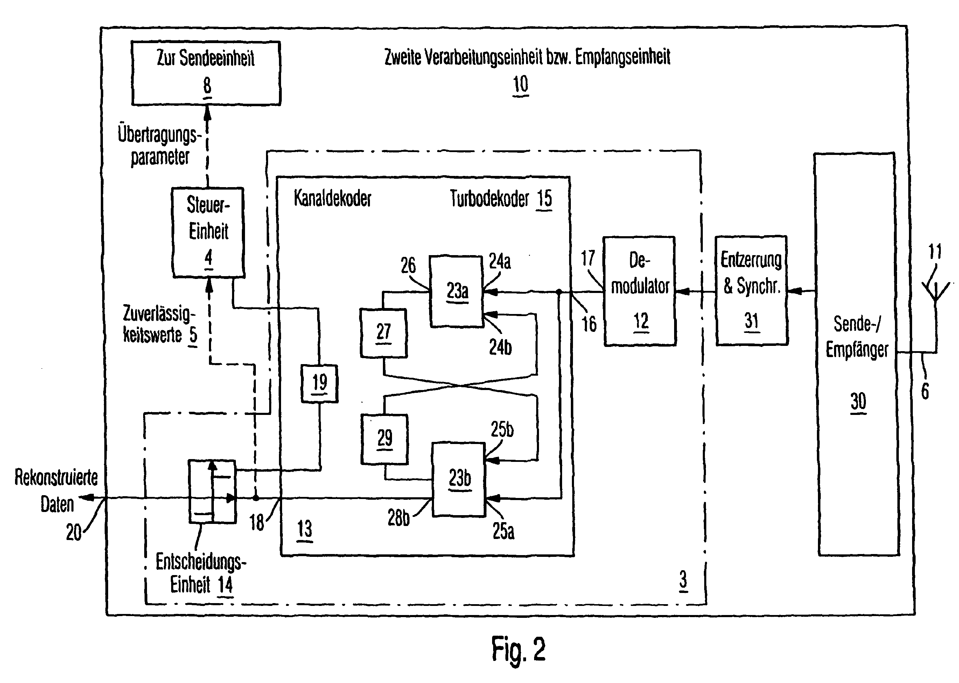

Die Kommunikationseinrichtungen 1a, 1b des erfindungsgemäßen Kommunikationssystems 1 verfügen über jeweils eine erste Verarbeitungseinheit 8 bzw. eine Sendeeinheit 8 für zu sendende Daten 9 sowie jeweils eine zweite Verarbeitungseinheit 10 bzw. eine Empfangseinheit 10 für die empfangenen Signale 6, wobei die zweite Verarbeitungseinheit 10 in Fig. 2 dargestellt ist. Beide Verarbeitungseinheiten 8, 10 einer Kommunikationseinheit 1a, 1b sind über die Steuereinheit 4 miteinander verbunden. Zwei Verarbeitungseinheiten von zwei miteinander kommunizierenden Kommunikationseinheiten 1a, 1b sind über den Übertragungskanal 2 gemäß Fig. 1 miteinander verbunden.

Fig. 2 zeigt ein detailliertes Schema einer zweiten Verarbeitungseinheit 10 bzw. einer Empfangseinheit 10 einer Kommunikationseinrichtung 1a, 1b des erfindungsgemäßen Kommunikationssystems 1. Die Empfangseinheit 10 umfasst gemäß Fig. 2 eine Antenne 11 zum Senden und Empfangen von Signalen, einen Sende/Empfänger 30, sowie eine Einheit 31 zum Entzerren und Synchronisieren der empfangenen Signale 6. An die Einheit 31 zum Entzerren und Synchronisieren der empfangenen Signale 6 ist die Datenrekonstruktionseinheit 3 angeschlossen.

Jeweils eine Kommunikationseinrichtung 1a, 1b des erfindungsgemäßen Kommunikationssystems 1 umfasst eine Datenrekonstruktionseinheit 3 mit einem Demodulator 12 und mit einem Kanaldekoder 13, sowie mit einer Entscheidungseinheit 14. Der mit dem Demodulator 12 verbundene Kanaldekoder 13 ist im gezeigten bevorzugten Ausführungsbeispiel ein Turbodekoder 15, dessen Dekodierverfahren mehrere Iterationsschritte aufweist, wobei eine Anzahl der durchgeführten Iterationsschritte und jeweils ein Zuverlässigkeitswert 5 bezüglich der Datenrekonstruktion an die Entscheidungseinheit 14 und an die Steuereinheit 4 weitergegeben wird.

In der Entscheidungseinheit 14 wird eine Vorzeichenentscheidung durchgeführt. In der Steuereinheit 4 wird die mittels des Zählers 19 ermittelte Anzahl von benötigten Iterationsschritten und/oder der Verlauf der Zuverlässigkeitswerte ausgewertet. Ein Eingang 16 des Kanaldekoders 13 in der Empfangseinheit 10 der Kommunikationseinrichtung 1a, 1b ist mit einem Ausgang 17 des Demodulators 12 verbunden. Ein Ausgang 18 des Kanaldekoders 13 ist mit der Entscheidungseinheit 14 verbunden.

Die Entscheidungseinheit 14 ist mit dem Ausgang 20 der jeweiligen Kommunikationseinrichtung 1a, 1b und mit dem Ausgang 18 des Kanaldekoders 13 der Datenrekonstruktionseinheit 3 verbunden.

In der Steuereinheit 4 einer zweiten Kommunikationseinrichtung 1b werden die Übertragungsparameter in Abhängigkeit von den aktuell empfangenen Zuverlässigkeitswerten 5 bestimmt und anschließend an einen Kanalkodierer 21 sowie an einen Modulator 22 der ersten Verarbeitungseinheit 8 bzw. der Sendeeinheit 8 der zweiten Kommunikationseinrichtung 1b weitergeleitet (open-loop-Verfahren).

In der Steuereinheit 4 der zweiten Kommunikationseinrichtung 1b werden die Übertragungsparameter in Abhängigkeit von den aktuell empfangenen Zuverlässigkeitswerten 5 bestimmt und anschließend über den Übertragungskanal 2 an einen Kanalkodierer 21 sowie an einen Modulator 22 der ersten Verarbeitungseinheit 8 bzw. der Sendeeinheit 8 einer ersten Kommunikationseinrichtung 1a weitergeleitet (closed-loop-Verfahren). Dieses Merkmal wird in Fig. 1 im Zusammenhang mit Fig. 2 deutlich gemacht.

Der Kanaldekoder 13 in der Empfangseinheit 10 einer Kommunikationseinrichtung 1a, 1b weist einen ersten Dekoder 23a und einen zweiten Dekoder 23b auf. Beide Dekoder 23a, 23b umfassen jeweils zwei Eingänge 24a, 24b, 25a, 25b, wobei jeweils ein erster Eingang 24a, 25a der beiden Dekoder 23a, 23b mit dem Ausgang 17 des Demodulators 12 verbunden ist und beide Dekoder 23a, 23b systematisch unterschiedliche Bits eines vom Demodulator 12 ausgehenden Bitstroms verarbeiten. Der erste Dekoder 23a des Kanaldekoders 13 weist einen Ausgang 26 auf, welcher über eine Verwürfelungseinheit (Interleaver) 27 mit einem zweiten Eingang 25b des zweiten Dekoders 23b verbunden ist. Der zweite Dekoder 23b des Kanaldekoders 13 weist einen ersten Ausgang 28a und einen zweiten Ausgang 28b auf, wobei der erste Ausgang 28a über eine Entwürfelungseinheit (Deinterleaver) 29 mit dem zweiten Eingang 24b des ersten Dekoders 23a verbunden ist. Der zweite Ausgang 28b des zweiten Dekoders 23b ist mit dem Ausgang 18 des Kanaldekoders 13 verbunden.

In dem erfindungsgemäßen Kommunikationssystem 1 werden die Übertragungsparameter in der ersten Verarbeitungseinheit 8 jeweils einer Kommunikationseinrichtung 1a, 1b eingestellt, wobei bevorzugt zumindest folgende Übertragungsparameter konfigurierbar bzw. einstellbar sind:

Modulationsart und/oder
Symbolumfang der Modulationsart und/oder
Senderleistung und/oder
Umfang eines Datenpakets und/oder
Kanalcodierverfahren und dessen Coderate.

Das erfindungsgemäße Verfahren zum Anpassen von Übertragungsparametern in einem Kommunikationssystem 1 mit zumindest einer ersten Kommunikationseinrichtung 1a sowie mit zumindest einer zweiten Kommunikationseinrichtung 1b ist auf einen zeitlich veränderlichen Übertragungskanal 2 anwendbar. Beide Kommunikationseinrichtungen 1a, 1b weisen jeweils eine Sendeeinheit 8 und eine Empfangseinheit 10 mit einer Datenrekonstruktionseinheit 4 auf, wobei die Sendeeinheit 8 und die Empfangseinheit 10 einer Kommunikationseinrichtung 1a, 1b über eine Steuereinheit 4 miteinander verbunden sind. Das erfindungsgemäße Verfahren durchläuft die folgenden Verfahrensschritte:

- in der Steuereinheit 4 der ersten Kommunikationseinrichtung 1a wird ein Zuverlässigkeitswert, der eine Wahrscheinlichkeit für eine Zuverlässigkeit bzw. eine Güte einer Datenrekonstruktion angibt, ausgewertet,
- aus dieser Auswertung werden Übertragungsparameter bestimmt, die an den Übertragungskanal 2 angepasst sind,
- diese Übertragungsparameter 2 werden entweder in der Sendeeinheit 8 der ersten Kommunikationseinrichtung 1a eingestellt (open loop) oder an die zweite Kommunikationseinrichtung 1b übermittelt und in der Sendeeinheit 8 der zweiten Kommunikationseinrichtung 1b eingestellt (closed loop).

Der Zuverlässigkeitswert 5 wird in einem Kanaldekoder 13 (auch mittels eines iterativen) Schätzverfahrens für einzelne Bits ermittelt, wobei das iterative Verfahren eine flexible Anzahl von Iterationsschritten aufweisen kann und die Anzahl der Iterationsschritte in der Empfangseinheit 10 mittels eines Zählers 19 erfasst und in der Steuereinheit 4 ausgewertet werden kann.

Der Zuverlässigkeitswert 5 wird bei dem erfindungsgemäßen Verfahren aus einem Log-Likelihood-Verhältnis für ein geschätztes Bit gebildet, wobei auch die Anzahl der Iterationsschritte, die für das Erreichen einer Zuverlässigkeitsschwelle benötigt werden, als Zuverlässigkeitswert 5 interpretiert werden kann. Das erfindungsgemäße Verfahren umfasst bevorzugt auch das Merkmal, dass der Zuverlässigkeitswert 5 z. B. aus einer Mittelwertsbildung über die Anzahl der benötigten Iterationsschritte der Bits gebildet wird.

Ferner entspricht der Zuverlässigkeitswert 5 einem zweier Tupel, welcher aus dem Log-Likelihood-Verhältnis und der Anzahl der Iterationsschritte oder aus dem Log-Likelihood-Verhältnis und dem Mittelwert der Anzahl der Iterationsschritte gebildet wird.

Das erfindungsgemäße Ausführungsbeispiel eines Verfahrens zum Schätzen einzelner Bits in einem Datenstrom mittels eines iterativen Schätzalgorithmus ist jeweils in einem Kanaldekoder 13 des erfindungsgemäßen Kommunikationssystems 1 implementiert.

Der Kanaldekoder 13 umfasst zumindest einen ersten Dekoder 23a und einen zweiten Dekoder 23b, wobei in einem Initialisierungsschritt eine geeignete erste Vorabinformation für den ersten Dekoder 23a eingestellt wird, ein Wert für die Abbruchbedingung festgelegt wird und eine Anzahl von Iterationsschritten bei Beginn der Iteration bzw. bei der Initialisierung Null beträgt. Der iterative Schätzalgorithmus beruht auf folgenden Iterationsschritten:

Ein erster Teil eines Datenstroms wird dem ersten Dekoder 23a zugeführt, welcher für jedes Bit des Datenstroms unter Berücksichtigung der ersten Vorabinformation sowohl einen ersten Schätzwert für das entsprechende Bit bestimmt als auch eine erste Zuverlässigkeitsinformation über diesen Schätzwert angibt.

Die erste Zuverlässigkeitsinformation wird dem zweiten Dekoder 23b als eine zweite Vorabinformation mitgeteilt. Der zweite Dekoder 23b bestimmt unter Berücksichtigung der zweiten Vorabinformation für jedes Bit eines zweiten Teils des Datenstroms sowohl einen zweiten Schätzwert als auch eine zweite Zuverlässigkeitsinformation über diesen Schätzwert. Dieser zweite Schätzwert wiederum wird dem ersten Dekoder 23a zugeführt und als nächste erste Vorabinformation im folgenden Iterationsschritt verwendet.

Die Anzahl der Iterationsschritte wird inkrementiert und der iterative Schätzalgorithmus wird abgebrochen, sobald die erste Zuverlässigkeitsinformation und/oder die zweite Zuverlässigkeitsinformation größer oder gleich dem Wert der Abbruchbedingung ist.

Das oben beschriebene Verfahren sieht vor, dass aus einem am Ausgang 18 des Kanaldekoders 13 vorliegenden Zuverlässigkeitswert 5, der der zweiten Zuverlässigkeitsinformation entspricht und der Anzahl der Iterationsschritte ein Zweier-Tupel gebildet werden kann, der eine verbesserte Aussage über die Güte des gerade durchgeführten Datenrekonstruktionsverfahrens macht, wobei die Zweier-Tupel wiederholt und fortwährend gebildet werden.

Die Erfindung ist nicht auf das in der Zeichnung dargestellte Ausführungsbeispiel, insbesondere nicht auf ein kommerzielles Funksystem wie beispielsweise GSM oder UMTS beschränkt. Alle vorstehend beschriebenen und in der Zeichnung dargestellten Merkmale sind beliebig miteinander kombinierbar.

**Patentansprüche**

1.  Kommunikationssystem (1) mit zumindest einer ersten Kommunikationseinrichtung (1a), die über einen bidirektionalen Übertragungskanal (2) mit zumindest einer zweiten Kommunikationseinrichtung (1b) verbunden ist, wobei die Kommunikationseinrichtungen (1a, 1b) jeweils eine Datenrekonstruktionseinheit (3) umfassen,
    wobei beide Kommunikationseinrichtungen (1a, 1b) jeweils eine Steuereinheit (4) zur Konfiguration verschiedener Übertragungsparameter, wie insbesondere Modulationsart und/oder Coderate und/oder Senderleistung und/oder Umfang von Datenpaketen, in Abhängigkeit von einem in der Steuereinheit (4) ausgewerteten Zuverlässigkeitswert (5) aufweisen, und
    wobei der Zuverlässigkeitswert (5) eine Wahrscheinlichkeit für eine Zuverlässigkeit bzw. eine Güte einer Datenrekonstruktion zur Rekonstruktion von gesendeten Daten (7) aus empfangenen Signalen (6) in der Datenrekonstruktionseinheit (3) angibt,
    **dadurch gekennzeichnet,**
    **dass** eine Bestimmung des Zuverlässigkeitswertes (5) aus einer Mittelwertbildung der Anzahl von Iterationsschritten eines iterativen Schätzverfahrens zur Schätzung des Zuverlässigkeitswertes (5) für einzelne Bits in einem Kanaldekoder (13) und daraus eine Konfiguration von Übertragungsparametern in der Steuereinheit (4) der ersten Kommunikationseinrichtung (1a) und entweder eine Einstellung dieser Übertragungsparameter in der Sendeeinheit (8) der ersten Kommunikationseinrichtung (1a) oder eine Übermittlung dieser Übertragungsparameter an die zweite Kommunikationseinrichtung (1b) und eine Einstellung dieser Übertragungsparameter in der Sendeeinheit (8) der zweiten Kommunikationseinrichtung (1b) erfolgt.

2.  Kommunikationssystem nach Anspruch 1,
    **dadurch gekennzeichnet,**
    **dass** die Kommunikationseinrichtungen (1a, 1b) jeweils eine erste Verarbeitungseinheit (8) für zu sendende Daten (9) sowie jeweils eine zweite Verarbeitungseinheit (10) für die empfangenen Signale (11) aufweisen, wobei beide Verarbeitungseinheiten (8, 10) über die Steuereinheit (4) miteinander verbunden sind.

3.  Kommunikationssystem nach Anspruch 1 oder 2,
    **dadurch gekennzeichnet,**
    **dass** die Datenrekonstruktionseinheit (3) einen Demodulator (12), einen Kanaldekoder (13) und eine Entscheidungseinheit (14) umfasst.

4.  Kommunikationssystem nach Anspruch 3,
    **dadurch gekennzeichnet,**
    **dass** der mit dem Demodulator (12) verbundene Kanaldekoder (13) ein Turbodekoder (15) ist, dessen Dekodierverfahren mehrere Iterationsschritte aufweist, wobei eine Weitergabe der Anzahl der durchgeführten Iterationsschritte und des Zuverlässigkeitswertes (5) der Datenrekonstruktion an die Entscheidungseinheit (14) und an die Steuereinheit (4) erfolgt.

5.  Kommunikationssystem nach Anspruch 4,
    **dadurch gekennzeichnet,**
    **dass** ein Eingang (16) des Kanaldekoders (13) mit einem Ausgang (17) des Demodulators (12) und ein Ausgang (18) des Kanaldekoders (13) mit der Entscheidungseinheit (14) verbunden sind.

6.  Kommunikationssystem nach einem der Ansprüche 4 bis 5,
    **dadurch gekennzeichnet,**
    **dass** in der Entscheidungseinheit (14) für eine Vorzeichenentscheidung eine Berücksichtigung des Zuverlässigkeitswertes (5) erfolgt.

7.  Kommunikationssystem nach einem der Ansprüche 4 bis 6,
    **dadurch gekennzeichnet,**
    **dass** in der Steuereinheit (4) eine Auswertung der mittels eines Zählers (19) ermittelten Anzahl von Iterationsschritten erfolgt.

8.  Kommunikationssystem nach einem der Ansprüche 3 bis 7,
    **dadurch gekennzeichnet,**
    **dass** die Entscheidungseinheit (14) mit dem Ausgang (20) der jeweiligen Kommunikationseinrichtung (1a, 1b) und mit dem Ausgang (18) des Kanaldekoders (13) der Datenrekonstruktionseinheit (4) verbunden ist.

9.  Kommunikationssystem nach Anspruch 2,
    **dadurch gekennzeichnet,**
    **dass** in der zweiten Verarbeitungseinheit (10) der ersten Kommunikationseinrichtung (1a) eine Konfiguration der Übertragungsparameter in Abhängigkeit von den aktuell empfangenen Zuverlässigkeitswerten (5) und anschließend eine Weiterleitung an einen Kanalkodierer (21a) sowie an einen Modulator (22a) der ersten Verarbeitungseinheit (8) der ersten Kommunikationseinrichtung (1a) erfolgt.

10. Kommunikationssystem nach Anspruch 2 oder 9,
    **dadurch gekennzeichnet,**
    **dass** in der zweiten Verarbeitungseinheit (10) der ersten Kommunikationseinrichtung (1a) eine Konfiguration der Übertragungsparameter in Abhängigkeit von den aktuell empfangenen Zuverlässigkeitswerten (5) und anschließend eine Weiterleitung über den Übertragungskanal (2) an einen Kanalkodierer (21b) sowie an einen Modulator (22b) der ersten Verarbeitungseinheit (8) der zweiten Kommunikationsrichtung (1b) erfolgt.

11. Kommunikationssystem nach einem der Ansprüche 3 bis 9,
**dadurch gekennzeichnet,**
**dass** der Kanaldekoder (13) einen ersten Dekoder (23a) und einen zweiten Dekoder (23b) mit jeweils zwei Eingängen (24a, 24b, 25a, 25b) aufweist.

12. Kommunikationssystem nach Anspruch 11,
**dadurch gekennzeichnet,**
**dass** jeweils ein erster Eingang (24a, 25a) der beiden Dekoder (23a, 23b) mit dem Ausgang (17) des Demodulators(12) verbunden ist und eine systematische Verarbeitung von unterschiedlichen Daten eines vom Demodulator (12) ausgehenden Datenstroms in beiden Dekodern (23a, 23b) erfolgt.

13. Kommunikationssystem nach Anspruch 12,
**dadurch gekennzeichnet,**
**dass** der erste Dekoder (23a) des Kanaldekoders (13) einen Ausgang (26) aufweist, welcher über eine Verwürfelungseinheit (27) mit einem zweiten Eingang(25b) des zweiten Dekoders (23b) verbunden ist.

14. Kommunikationssystem nach Anspruch 11 oder 13,
**dadurch gekennzeichnet,**
**dass** der zweite Dekoder (23b) des Kanaldekoders (13) einen ersten Ausgang (28a) und einen zweiten Ausgang (28b) aufweist, wobei der erste Ausgang (28a) über eine Entwürfelungseinheit (29) mit dem zweiten Eingang (24b) des ersten Dekoders (23a) verbunden ist.

15. Kommunikationssystem nach Anspruch 14,
**dadurch gekennzeichnet,**
**dass** der zweite Ausgang (28b) des zweiten Dekoders (23b) mit dem Ausgang (18) des Kanaldekoders (13) verbunden ist.

16. Kommunikationssystem nach einem der Ansprüche 2, 9 oder 10,
**dadurch gekennzeichnet,**
**dass** eine Einstellung der Übertragungsparameter in der ersten Verarbeitungseinheit (8) auf Basis der Zuverlässigkeitswerte 5 erfolgt, die folgende Übertragungsparameter umfasst:

Modulationsart und/oder
Symbolumfang der Modulationsart und/oder
Senderleistung und/oder
Umfang eines Datenpakets und/oder
Kanalcodierverfahren und/oder
die Coderate.

17. Verfahren zum Anpassen von Übertragungsparametern in einem Kommunikationssystem (1) mit zumindest einer ersten Kommunikationseinrichtung (1a) sowie mit zumindest einer zweiten Kommunikationseinrichtung (1b) und einem zeitlich veränderlichem Übertragungskanal (2), wobei die Kommunikationseinrichtungen (1a, 1b) jeweils eine Sendeeinheit (8) und eine Empfangseinheit (10) mit einer Datenrekonstruktionseinheit (3) aufweisen, wobei Sendeeinheit (8) und Empfangseinheit (10) jeder Kommunikationseinrichtung (1a, 1b) über jeweils eine Steuereinheit (4) miteinander verbunden sind, wobei das Verfahren folgende Verfahrensschritte durchläuft:

- in der Steuereinheit (4) der ersten Kommunikationseinrichtung (1a) wird ein Zuverlässigkeitswert (5), der eine Wahrscheinlichkeit für eine Zuverlässigkeit bzw. eine Güte einer Datenrekonstruktion angibt, ausgewertet,
- aus dieser Auswertung werden Übertragungsparameter bestimmt, die an den Übertragungskanal (2) angepasst sind,
- diese Übertragungsparameter werden entweder in der Sendeeinheit (8) der ersten Kommunikationseinrichtung (1a) eingestellt oder an die zweite Kommunikationseinrichtung (1b) übermittelt und in der Sendeeinheit (8) der zweiten Kommunikationseinrichtung (1b) eingestellt,

**dadurch gekennzeichnet,**
**dass** der Zuverlässigkeitswert (5) aus einer Mittelwertbildung der Anzahl von Iterationsschritten eines iterativen Schätzverfahrens zur Schätzung des Zuverlässigkeitswertes (5) für einzelne Bits in einem Kanaldekoder (13) gebildet wird.

18. Verfahren nach Anspruch 17,
**dadurch gekennzeichnet,**
**dass** der Zuverlässigkeitswert (5) in einem Kanaldekoder(13) für einzelne Bits ermittelt wird.

19. Verfahren nach Anspruch 17,
**dadurch gekennzeichnet,**
**dass** die Anzahl der Iterationsschritte in der Empfangseinheit (10) mittels eines Zählers (19) erfasst wird und in der Steuereinheit (4) ausgewertet wird.

20. Verfahren nach einem der Ansprüche 17 bis 19,
**dadurch gekennzeichnet,**
**dass** der Zuverlässigkeitswert (5) aus einem Log-Likelihood-Verhältnis für ein geschätztes Bit gebildet wird.

21. Verfahren nach Anspruch 20,
**dadurch gekennzeichnet,**
**dass** der Zuverlässigkeitswert (5) einem Zweier-Tupel entspricht, welcher aus dem Log-Likelihood-Verhältnis und der Anzahl der Iterationsschritte gebildet wird.

22. Verfahren nach Anspruch 20,
**dadurch gekennzeichnet,**
**dass** der Zuverlässigkeitswert (5) einem Tupel entspricht, welcher aus dem Log-Likelihood-Verhältnis und dem Mittelwert der Anzahl der Iterationsschritte gebildet wird.

**Claims**

1. A communications system (1) with at least one first communications device (1a), which is connected via a bidirectional transmission channel (2) to at least one second communications device (1b), wherein the communications devices (1a, 1b) each comprise a data reconstruction unit (3),
wherein both communications devices (1a, 1b) each comprise a control unit (4) for the configuration of various transmission parameters, such as, in particular, modulation type and/or code rate and/or transmitter power and/or size of data packets, dependent upon a reliability value (5) evaluated in the control unit (4), and
wherein the reliability value (5) indicates a probability for a reliability or respectively a quality of a data reconstruction for the reconstruction of transmitted data (7) from received signals (6) within the data reconstruction unit (3),
**characterised in that**
a determination of the reliability value (5) from an averaging of the number of iterative steps of an iterative estimation method for estimating the reliability value (5) for individual bits is implemented in a channel decoder (13), and from this, a configuration of transmission parameters is implemented in the control unit (4) of the first communications device (1a), and either an adjustment of these transmission parameters is implemented in the transmission unit (8) of the first communications device (1a) or a communication of these transmission parameters to the second communications device (1b) is implemented and an adjustment of these transmission parameters is implemented in the transmission unit (8) of the second communications device (1b).

2. The communications system according claim 1,
**characterised in that**
the communications devices (1a, 1b) each provide a first processing unit (8) for data (9) to be transmitted and each comprise a second processing unit (10) for the received signals (11), wherein both processing units (8, 10) are connected to one another via the control unit (4).

3. The communications system according to claim 1 or 2,
**characterised in that**
the data reconstruction unit (3) comprises a demodulator (12), a channel decoder (13) and a decision unit (14).

4. The communications system according to claim 3,
**characterised in that**
the channel decoder (13) connected to the demodulator (12) is a turbo-decoder (15), of which the decoding method comprises several iterative steps, wherein a number of the implemented iterative steps and the reliability value (5) of the data reconstruction is routed to the decision unit (14) and/or to the control unit (4).

5. The communications system according to claim 4,
**characterised in that**
an input (16) of the channel decoder (13) is connected to an output (17) of the demodulator (12), and an output (18) of the channel decoder (13) is connected to the decision unit (14).

6. The communications system according to any one of claims 4 to 5,
**characterised in that**
the decision unit (14) takes the reliability value (5) into consideration for a signing decision.

7. The communications system according to any one of claims 4 to 6,
**characterised in that**
the control unit (4) evaluates the determined number of iterative steps by means of a counter (19).

8. The communications system according to any one of claims 3 to 7,
**characterised in that**
the decision unit (14) is connected to the output (20) of the respective communications device (1a, 1b) and to the output (18) of the channel decoder (13) of the data reconstruction unit (4).

9. The communications system according to claim 2,
**characterised in that**
the second processing unit (10) of the first communications device (1a) configures the transmission parameters dependent upon the currently received reliability values (5) and then routes them to a channel coder (21a) and to a modulator (22a) of the first processing unit (8) of the first communications device (1a).

10. The communications system according to claim 2 or 9,
**characterised in that**
the second processing unit (10) of the communications device (1a) configures the transmission parameters dependent upon the currently received reliability values (5) and then routes them via the transmission channel (2) to a channel coder (21b) and to a modulator (22b) of the first processing unit (8) of the second communications device (1b).

11. The communications system according to any one of claims 3 to 9,
    **characterised in that**
    the channel decoder (13) provides a first decoder (23a) and a second decoder (23b) with respectively two inputs (24a, 24b, 25a, 25b).

12. The communications system according to claim 11,
    **characterised in that**,
    in each case, a first input (24a, 25a) of the two decoders (23a, 23b) is connected to the output (17) of the demodulator (12), and both decoders (23a, 23b) systematically process different data of a data stream flowing from the demodulator (12).

13. The communications system according to claim 12,
    **characterised in that**
    the first decoder (23a) of the channel decoder (13) provides an output (26), which is connected via an interleaver unit (27) to a second input (25b) of the second decoder (23b).

14. The communications system according to claim 11 or 13,
    **characterised in that**
    the second decoder (23b) of the channel decoder (13) provides a first output (28a) and a second output (28b), wherein the first output (28a) is connected via a de-interleaver unit (29) to the second input (24b) of the first decoder (23a).

15. The communications system according to claim 14,
    **characterised in that**
    the second output (28b) of the second decoder (23b) is connected to the output (18) of the channel decoder (13).

16. The communications system according to any one of claims 2, 9 or 10,
    **characterised in that**
    the transmission parameters in the first processing unit (8) are adjusted on the basis of the reliability values (5) and comprise the following transmission parameters:

    Modulation type and/or
    Symbol size of the modulation type and/or
    Transmitter power and/or
    Size of a data packet and/or
    Channel coding method and/or
    The code rate.

17. A method for the adaptation of transmission parameters within a communications system (1) with at least one first communications device (1a) and with at least one second communications device (1b) and a time-variable transmission channel (2), wherein the communications devices (1a, 1b) each provide a transmission unit (8) and reception unit (10) with a data reconstruction unit (3), wherein the transmission unit (8) and reception unit (10) of a communications device (1a, 1b) are connected to one another via a control unit (4), wherein the method runs through the following method steps:

    - within the control unit (4) of the first communications device (1a), a reliability value (5), which indicates a probability for a reliability or a quality of a data reconstruction, is evaluated,
    - from this evaluation, transmission parameters are determined, which are adapted to the transmission channel (2),
    - these transmission parameters are adjusted either in the transmission unit (8) of the first communications device (1a) or communicated to the second communications device (1b) and adjusted within the transmission unit (8) of the second communications device (1b),

    **characterised in that**,
    the reliability value (5) is formed from an averaging of the number of iterative steps of an iterative estimation method for the estimation of the reliability value (5) for individual bits in a channel coder (13).

18. The method according to claim 17,
    **characterised in that**
    the reliability value (5) is determined for individual bits in a channel decoder (13).

19. The method according to claim 17,
    **characterised in that**
    the number of iterative steps in the receiver unit (10) is registered by means of a counter (19) and evaluated within the control unit (4).

20. The method according to any one of claims 17 to 19,
    **characterised in that**
    the reliability value (5) is formed from a log-likelihood ratio for an estimated bit.

21. The method according to claim 20,
    **characterised in that**
    the reliability value (5) corresponds to a 2-tuple, which is formed from the log-likelihood ratio and the number of iterative steps.

22. The method according to claim 20,
    **characterised in that**
    the reliability value (5) corresponds to a tuple, which is formed from the log-likelihood ratio and the mean value of the number of iterative steps.

**Revendications**

1. Système de communication (1) comportant au moins un premier dispositif de communication (1a), qui est relié par l'intermédiaire d'un canal de transmission bidirectionnel (2) à au moins un second dispositif de communication (1b), dans lequel les dispositifs de communication (1a, 1b) comportent respectivement une unité de reconstruction de données (3), dans lequel les deux dispositifs de communication (1a, 1b) présentent respectivement une unité de commande (4) en vue de la configuration de différents paramètres de transmission, comme en particulier le type de modulation et/ou le taux de codage et/ou la puissance de l'émetteur et/ou le volume des paquets de données, conformément à une valeur de fiabilité (5) évaluée dans l'unité de commande (4), et dans lequel la valeur de fiabilité (5) indique une probabilité pour une fiabilité ou une qualité d'une reconstruction de données pour la reconstruction de données envoyées (7) à partir des signaux reçus (6) dans l'unité de reconstruction de données (3), **caractérisé en ce que** une détermination de la valeur de fiabilité (5) est effectuée à partir de la formation d'une valeur moyenne de la pluralité d'étapes d'itération d'un procédé d'évaluation itératif en vue de l'évaluation de la valeur de fiabilité (5) pour différents bits dans un décodeur de canal (13) et à partir de là, une configuration de paramètres de transmission dans l'unité de commande (4) du premier dispositif de communication (1a) et soit un réglage de ces paramètres de transmission dans l'unité d'émission (8) du premier dispositif de communication (1a) soit une transmission de ces paramètres de transmission au second dispositif de communication (1b) et un réglage de ces paramètres de transmission dans l'unité d'émission (8) du second dispositif de communication (1b).

2. Système de communication selon la revendication 1, **caractérisé en ce que** les dispositifs de communication (1a, 1b) présentent respectivement une première unité de traitement (8) pour les données à envoyer (9) ainsi que respectivement une seconde unité de traitement (10) pour les signaux reçus (11), dans lequel les deux unités de traitement (8, 10) sont reliées l'une à l'autre par l'intermédiaire de l'unité de commande (4).

3. Système de communication selon la revendication 1 ou 2, **caractérisé en ce que** l'unité de reconstruction de données (3) comporte un démodulateur (12), un décodeur de canal (13) et une unité de décision (14).

4. Système de communication selon la revendication 3, **caractérisé en ce que** le décodeur de canal (13) relié au démodulateur (12) est un turbo-décodeur (15), dont le procédé de décodage comporte plusieurs étapes d'itération, dans lequel une transmission de la pluralité des étapes d'itération effectuées et de la valeur de fiabilité (5) de la reconstruction de données est effectuée dans l'unité de décision (14) et dans l'unité de commande (4).

5. Système de communication selon la revendication 4, **caractérisé en ce que** une entrée (16) du décodeur de canal (13) est reliée à une sortie (17) du démodulateur (12) et une sortie (18) du décodeur de canal (13) est reliée à l'unité de décision (14).

6. Système de communication selon l'une des revendications 4 à 5, **caractérisé en ce que** une considération de la valeur de fiabilité (5) est effectuée dans l'unité de décision (14) pour une décision de signe.

7. Système de communication selon l'une des revendications 4 à 6, **caractérisé en ce que** une évaluation de la pluralité d'étapes d'itération détectées au moyen d'un compteur (19) est effectuée dans l'unité de commande (4).

8. Système de communication selon l'une des revendications 3 à 7, **caractérisé en ce que** l'unité de décision (14) est reliée à la sortie (20) du dispositif de communication respectif (1a, 1b) et à la sortie (18) du décodeur de canal (13) de l'unité de reconstruction de données (4).

9. Système de communication selon la revendication 2, **caractérisé en ce que** une configuration des paramètres de transmission est effectuée dans la seconde unité de traitement (10) du premier dispositif de communication (1a) conformément aux valeurs de fiabilité reçues effectives (5) et ensuite une transmission à un codeur de canal (21a) ainsi qu'à un modulateur (22a) de la première unité de traitement (8) du premier dispositif de communication (1a) est effectuée.

10. Système de communication selon la revendication 2 ou 9, **caractérisé en ce que** une configuration des paramètres de transmission est effectuée dans la seconde unité de traitement (10) du premier dispositif de communication (1a) conformément aux valeurs de fiabilité reçues effectives (5) et ensuite une transmission par l'intermédiaire du canal de transmission (2) à un codeur de canal (21b) ainsi qu'à un modulateur (22b) de la première unité de traitement (8) du second dispositif de communication (1b) est effectuée.

11. Système de communication selon l'une des revendications 3 à 9, **caractérisé en ce que** le décodeur de canal (13) présente un premier décodeur (23a) et un second décodeur (23b) comportant respectivement deux entrées (24a, 24b, 25a, 25b).

12. Système de communication selon la revendication 11, **caractérisé en ce que** une première entrée respective (24a, 25a) des deux décodeurs (23a, 23b) est reliée à la sortie (17) du démodulateur (12) et un traitement systématique des différentes données d'un flux de données sortant du démodulateur (12) est effectué dans les deux décodeurs (23a, 23b).

13. Système de communication selon la revendication 12, **caractérisé en ce que** le premier décodeur (23a) du décodeur de canal (13) présente une sortie (26), qui est reliée à une seconde entrée (25b) du second décodeur (23b) par l'intermédiaire d'une unité de cryptage (27).

14. Système de communication selon la revendication 11 ou 13, **caractérisé en ce que** le second décodeur (23b) du décodeur de canal (13) présente une première sortie (28a) et une seconde sortie (28b), dans lequel la première sortie (28a) est reliée à la seconde entrée (24b) du premier décodeur (23a) par l'intermédiaire d'une unité de décryptage (29).

15. Système de communication selon la revendication 14, **caractérisé en ce que** la seconde sortie (28b) du second décodeur (23b) est reliée à la sortie (18) du décodeur de canal (13).

16. Système de communication selon l'une des revendications 2, 9 ou 10, **caractérisé en ce que** un réglage des paramètres de transmission est effectué dans la première unité de traitement (8) en fonction des valeurs de fiabilité 5, qui comporte les paramètres de transmission suivants :

le type de modulation et/ou
le volume de symbole du type de modulation et/ou
la puissance de l'émetteur et/ou
le volume d'un paquet de données et/ou
le procédé de codage de canal et/ou
le taux de codage.

17. Procédé d'adaptation des paramètres de transmission dans un système de communication (1) comportant au moins un premier dispositif de communication (1a) ainsi qu'au moins un second dispositif de communication (1b) et un canal de transmission variable dans le temps (2), dans lequel les dispositifs de communication (1a, 1b) présentent respectivement une unité d'émission (8) et une unité de réception (10) comportant une unité de reconstruction de données (3), dans lequel l'unité d'émission (8) et l'unité de réception (10) de chaque dispositif de communication (1a, 1b) sont reliées l'une à l'autre par l'intermédiaire d'une unité de commande respective (4),
dans lequel le procédé effectue les étapes de procédé suivantes :

- dans l'unité de commande (4) du premier dispositif de communication (1a) est évaluée une valeur de fiabilité (5), qui indique une probabilité pour une fiabilité ou une qualité d'une reconstruction de données,
- à partir de cette évaluation sont déterminés des paramètres de transmission, qui sont adaptés au canal de transmission (2),
- ces paramètre de transmission sont réglés soit dans l'unité d'émission (8) du premier dispositif de communication (1a) soit sont transmis au second dispositif de communication (1b) et réglés dans l'unité d'émission (8) du second dispositif de communication (1b),

en ce que la valeur de fiabilité (5) est formée à partir de la formation de la valeur moyenne de la pluralité d'étapes d'itération d'un procédé d'évaluation itératif en vue de l'évaluation de la valeur de fiabilité (5) pour différents bits dans un décodeur de canal (13).

18. Procédé selon la revendication 17, **caractérisé en ce que** la valeur de fiabilité (5) est détectée dans un décodeur de canal (13) pour différents bits.

19. Procédé selon la revendication 17, **caractérisé en ce que** la pluralité d'étapes d'itération dans l'unité de réception (10) est détectée au moyen d'un compteur (19) et est évaluée dans l'unité de commande (4).

20. Procédé selon l'une des revendications 17 à 19, **caractérisé en ce que** la valeur de fiabilité (5) est formée à partir d'un rapport de vraisemblance logarithmique pour ladite évaluée.

21. Procédé selon la revendication 20, **caractérisé en ce que** la valeur de fiabilité (5) correspond à un couple, qui est formé à partir du rapport de vraisemblance logarithmique et de la pluralité d'étapes d'itération.

22. Procédé selon la revendication 20, **caractérisé en**

**ce que**

la valeur de fiabilité (5) correspond à un tuple, qui est formé à partir du rapport de vraisemblance logarithmique et de la valeur moyenne de la pluralité d'étapes d'itération.

Kommunikationseinrichtung    1a

Zu sendende
Daten 9 →

| Kanal-kodierer 21a | → | Modulator 22a |

Übertragungsparameter

| Steuer-Einheit 4 |

Sende-/Empfänger 30

8

Zuverlässigkeitswerte    5

Rekonstruierte
Daten 33 ←

| Kanal-dekoder 13 | ← | De-modulator 12 | ← | Entzerrung & Synchr. 31 |

11

7

1 {

2

Kommunikationseinrichtung    1b

Zu sendende
Daten 9 →

| Kanal-kodierer 21b | → | Modulator 22b |

Übertragungsparameter

| Steuer-Einheit 4 |

Sende-/Empfänger 30

10

Zuverlässigkeitswerte    5

Rekonstruierte
Daten 33 ←

| Kanal-dekoder 13 | ← | De-modulator 12 | ← | Entzerrung & Synchr. 31 |

11

6

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19651593 A1
- US 20040037262 A1
- DE 19736625 C1